# EUROPEAN PATENT SPECIFICATION

(11) **EP 2 990 688 B1**
(45) Date of publication and mention of the grant of the patent: **17.02.2021**
(21) Application number: 15460026.6
(22) Date of filing: 17.06.2015
(51) Int. Cl.: F16H 7/08

(54) **AUTOMATIC TENSIONER**
AUTOMATISCHER SPANNER
TENDEUR AUTOMATIQUE

(30) Priority: 17.06.2014 PL 40859714
(43) Date of publication of application: 02.03.2016
(73) Proprietor: Przedsiebiorstwo Concept Stal B&S, 22-100 Chelm (PL)
(72) Inventor: LEJMAN, Stanislaw, 22-100 Chelm (PL)
(74) Representative: Swiecicki, Krzysztof

(56) References cited:
- FR-A- 1 166 119
- US-A- 2 469 296
- US-A- 3 978 737

## Description

The present invention relates to an automatic strand, belt or chain tensioner that shifts a tensioner pulley between a drive powering pulley and a pulley being powered. The tensioner comprises a slide to which the tensioner pulley is attached and which shifts along a guideway being fitted to a casing, and a component by which the slide with the tensioner pulley is shifted.

The automatic tensioner has been designed for application in all types of rope chain drives with belts, etc. which need constant strand or belt tension, as well as for other applications that require maintained constant belt tension.

The Japanese patent application no. JP002003294095 A1 provides a description of a tensioner which helps set the strength of the tensioning arm as well as the most effective operation of sprockets in an automatic ratchet tensioner. The automatic ratchet tensioner has a tensioning arm that is fitted in the casing and moves within the axis of the arm's movement. It also has a spiral string that sets the tensioning arm in motion which is then transmitted onto the chain holder, etc., and two sets of sprocket mechanisms that prevent backward motion. The solution concerned involves a considerable number of sprocket cogs with uniform scales that are arranged in a uniform way along the tensioning arm, within the arm's axis, as well as cogged jaws that cooperate with the sprocket wheels in sequence, and which are fitted in the casing, and shifted approximately by half of the scale from one another.

The Canadian patent application no. CA000002246187 A1 provides a description of a chain tensioner which is automatically self-adjusting. The chain holder runs along the chain movement. The tensioner pulley is fitted on the chain holder. When the chain slack increases, the tensioner pulley rotates thanks to a "cam" spring to a position in which the "cam's" wall with a greater radius forces out the chain holder. The application of a "cam" guarantees a steady support which prevents the chain from transferring the chain tension forces onto the chain tensioner spring, which is conductive of chain slack during the chain's backward motion. In order to ensure the system's compactivity and optimum force distribution, the chain has a support between the two "cams". The "cams" have ratchet gear teeth.

The US patent description no. US 3978737 discloses a chain tensioning device for a chain drive. The device includes a first bracket to which a sprocket wheel is rotatably mounted with a chain thereon, and a stationary support bracket, which comprises a vertical plate and two horizontal plates joined to the vertical plate. Between the horizontal plates there is a horizontal retainer bar. Through openings of these two horizontal plates and retainer bar a shaft extends, which is secured in its lower part to the first bracket. Around an upper part of the shaft there is spring being compressed between the most upper plate and a washer at the top of the shaft. The lower portion of the shaft has serrations, while an opening of the retention bar has slanted inwardly and outwardly opposite walls. Opposite to the serrations, the shaft has a notch. The device includes also a lever, which moves, by an operator, the retainer bar with slanted opening walls between two positions: a first position in which one slanted opening wall engages with a tooth of the serration of the shaft, and a second position in which the opposite slanted opening wall engages with the notch of the shaft. The first position is the operation position, where the shaft can move only upwards in tensioning directions, while opposite movement is prevented. The second position is the service position in which opposite movements are allowed and prevented in order to relieve the tension on the chain. As the chain stretches the spring urges the shaft and the serrated tooth will slide up detent wall until it engages with a next serrated tooth.

In this solution the movement of the shaft and thus the tension is regulated in the stepwise manner defined by the distance between teeth of the serrations. The tension during movement between the two teeth is not stable as it allows the shaft to be moved in both directions up and down. Moreover, high loads will require larger tensioning devices and larger distances between teeth of the serrations on the shaft, which decreases control accuracy. On the other hand, smaller distances prevent the serrations to withstand high loads.

Strand drives with ropes or belts tend to have increased dive slack after some time of use, which is due to wear or extension of drive components. Therefore, there is a need to automatically compensate for the resulting differences in length.

It is an object of the invention to provide a tensioner that would overcome problems of tensioners that have been known so far, in particular the tensioner with a stepless tensioning capability.

Accordingly, the invention provides an automatic tensioner, which is characterized by:
- a slide that shifts along a first guideway and having at its lower part a second guideway with an indent, whose bearing surface is tilted towards a direction of the shift of the key;
- a key, by which the slide with a tensioner pulley is shifted, and having mutually tilted upper and lower working surfaces, wherein an angle between the working surfaces of the key is equal to a tilting angle of the bearing surface of the intend; and wherein
- the key cooperates with the first guideway and the second guideway in such a way that the upper surface of the key rests upon a lower surface of the first guideway, while the lower surface of the key touches the bearing surface of the indent;
- under a constant force exerted on the key, for instance by a spring, the key is adapted to shift along a direction of the force and the slide with the tensioner pulley is adapted to shift downwards.

Preferably, the angle between the working surfaces of the key ranges from 3 to 20 degrees.

Advantageously, the key has at its wider end a protruding part or lip, which cooperates with the first guideway's edge and restricts key shifting.

Further, the key's lateral surface has a ratchet toothed bar, which cooperates with a movable pawl on the first guideway.

The operation of the automatic tensioner being subject to the invention is stepless, and its structure prevents any return shifting to the initial position, which in turn prevents tensioner backward motion, drive slacking, etc.

Where the key's working surfaces have larger tilt angles or where there are larger loads, the key can be equipped with an additional ratchet toothed bar.

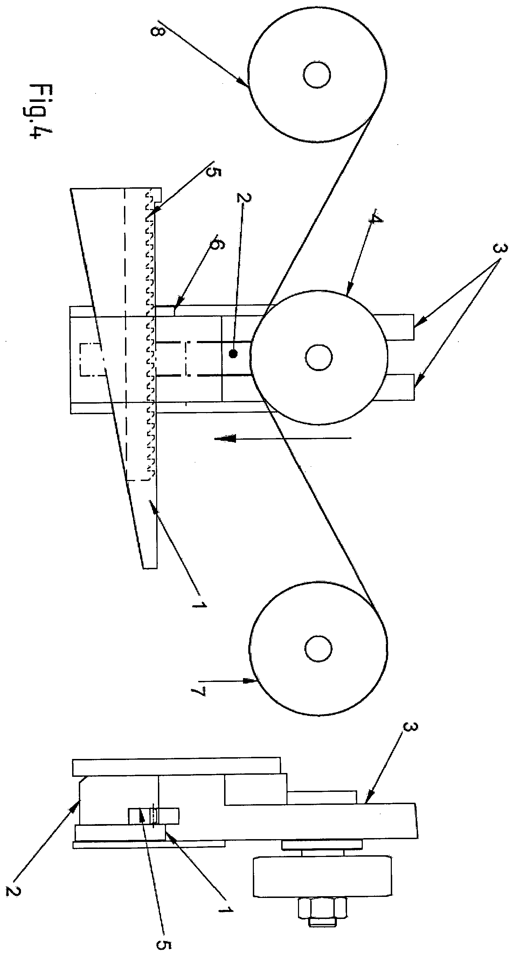

The invention is exemplary described below with reference to the attached drawing, in which Fig.1 shows a schematic front view of a tensioner with a drive belt in its initial position, Figs. 2 and 3 show schematic front views of the tensioner in its subsequent positions that correspond to subsequent stages of its operation, Fig. 4 shows a front and side views of the tensioner, Fig. 5 shows a perspective view of tensioner's components, and Fig. 6 shows a perspective view of a slide of the tensioner.

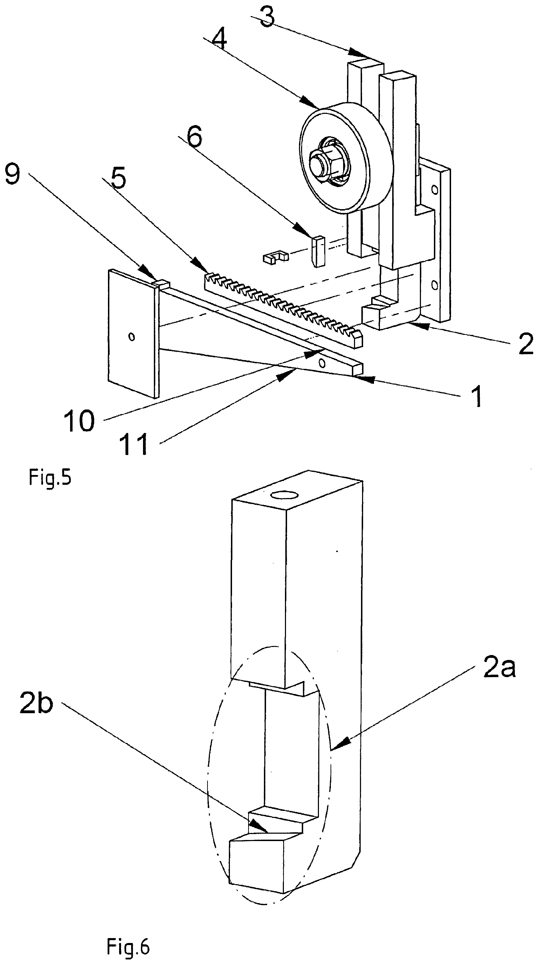

The automatic strand, belt, chain, etc. tensioner consists of the following components: a slide 2 (Fig. 6) shifting along a first guideway 3, whose axis is supported with bearings, a tensioner pulley 4, and a key 1, which causes shifting and blocking of the slide 2. The first guideway 3 with the slide 2 is fitted to a casing of a device in which the tensioner has been applied. At the lower part of the slide 2 there is a second guideway 2a for the key 1. The second guideway 2a has an indent 2b, whose bearing surface is tilted towards the direction of the shift at an angle α that is equal to an angle of the mutual tilt of the working surfaces 10 and 11 of the key 1. The angle between the working surfaces 10 and 11 of the key 1 ranges from 3 to 20 degrees, depending on the specific features and parameters of the device in which the tensioner has been applied. The key 1 has a protrusion 9 on its broader end. The protrusion 9 cooperates with the edge of the first guideway 3 and restricts key shifting.

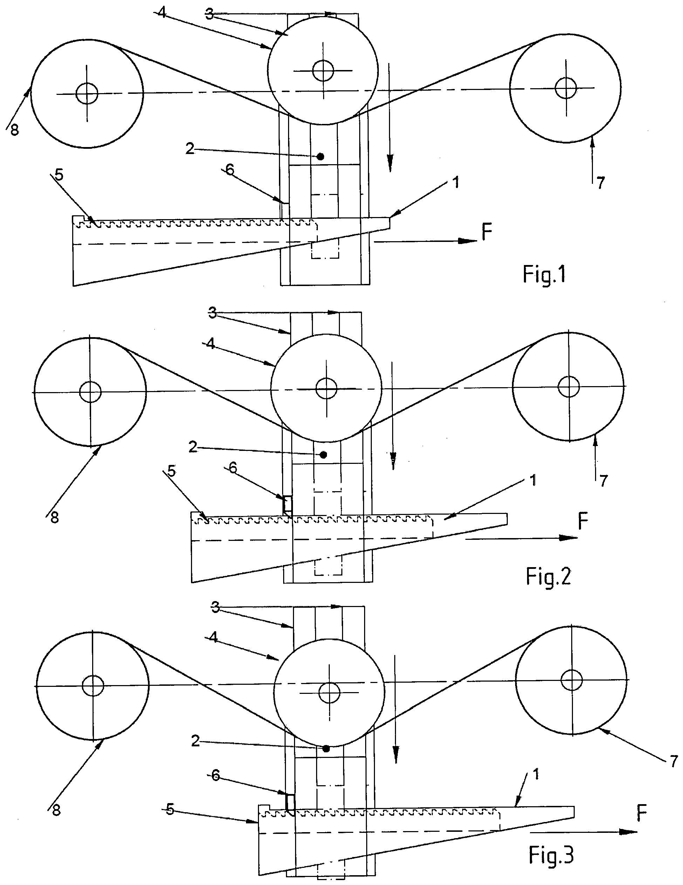

It the initial position of the tensioner, the key 1 is placed in the guideway 2a, and the lower working surface of the key 11 touches the Indent surface 2b, and its upper working surface 10 rests upon the lower surface of the first guideway 3. In this way, the slide 2 is tightly fitted on the belt, which blocks it from upward shifting and prevents slacking. Should slacking occur (Figs. 1, 2 and 3) in the drive system, the force F, which affects the key 1, causes the key's shifting along the direction of the force, which causes the slide 2 downward shifting, and eliminates the slack. Thanks to such a structure, the tension of the rope on both pulleys 7 and 8 within the system is regulated steplessly, which prevents the slide's backward motion and reoccurrence of slack. The slide cannot move backward thanks to the system's self-locking features, and in certain applications thanks to the additional use of a ratchet toothed bar 5 which cooperates with a movable pawl 6. In relation to many of the existing solutions, which have no self-locking components, the slide shifts smoothly and in both directions, while in the solution according to the present invention the shift occurs only in one direction.

## Claims

1. An automatic strand, belt or chain tensioner that shifts a tensioner pulley (4) between a drive powering pulley (7, 8) and a pulley being powered (7, 8), the tensioner comprising a slide (2) to which the tensioner pulley (4) is attached and which shifts along a first guideway (3) being fitted to a casing, and a component by which the slide (2) with the tensioner pulley (4) is shifted, **characterized in that**
- the slide (2) has at its lower part a second guideway (2a) with an indent (2b), whose bearing surface is tilted towards a direction of the shift ;
- the component by which the slide (2) with the tensioner pulley (4) is shifted constitutes a key (1) having mutually tilted upper and lower working surfaces (10, 11), wherein an angle between the working surfaces (10, 11) of the key (1) is equal to a tilting angle of the bearing surface of the intend (2b):
wherein
- the key (1) cooperates with the first guideway (3) and the second guideway (2a) in such a way that the upper surface (10) of the key (1) rests upon a lower surface of the first guideway (3), while the lower surface (11) of the key (1) touches the bearing surface of the indent (2b); and
- under a constant force (F) exerted on the key (1), for instance by a spring, the key (1) is adapted to shift along a direction of the force (F) and the slide (2) with the tensioner pulley (4) is adapted to shift downwards.

2. The tensioner according to claim 1, **characterized in that** the angle between the working surfaces (10) and (11) of the key (1) ranges from 3 to 20 degrees.

3. The tensioner according to claim 1, **characterized in that** the key (1) is provided with a protrusion (9) on its wider end, which cooperates with the edge of the first guideway (3) and restricts key shifting.

4. The tensioner according to claim 1, **characterized in that** the key (1) is further provided with a ratchet toothed bar (5) on its lateral surface, while the first guideway (3) is provided with a movable pawl (6) that cooperates with the ratchet toothed bar (5) of the key (1).

## Patentansprüche

1. Automatischer Strang-, Riemen- oder Kettenspanner, der eine Spannrolle (4) zwischen einem Antrieb der Riemenscheibe (7, 8) und einer angetriebenen Riemenscheibe (7, 8) verschiebt, wobei der Spanner einen Schlitten (2) aufweist, an dem die Spannrolle (4) befestigt ist und der sich entlang einer ersten Führungsbahn (3) verschiebt, die an einem Gehäuse angebracht ist, und eine Komponente, durch das der Schlitten (2) mit der Spannrolle (4) verschoben wird, **dadurch gekennzeichnet, dass**
- der Schlitten (2) an seinem unteren Teil eine zweite Führungsbahn (2a) mit einer Vertiefung (2b) aufweist, deren Auflagefläche in Richtung der Verschieberichtung geneigt ist.
- die Komponente, durch die der Schlitten (2) mit der Spannrolle (4) verschoben wird, eine Passfeder (1) mit gegenseitig geneigten oberen und unteren Arbeitsflächen (10, 11) bildet, wobei ein Winkel zwischen den Arbeitsflächen (10, 11) der Passfeder (1) gleich einem Neigungswinkel der Lagerfläche des Schlittens (2b) ist:
wobei
die Passfeder (1) mit der ersten Führungsbahn (3) und der zweiten Führungsbahn (2a) derart zusammenwirkt, dass die obere Fläche (10) der Passfeder (1) auf einer unteren Fläche der ersten Führungsbahn (3) aufliegt, während die untere Fläche (11) der Passfeder (1) die Lagerfläche der Vertiefung (2b) berührt; und
- unter einer konstanten Kraft (F), die auf die Passfeder (1) ausgeübt wird, beispielsweise durch eine Feder, die Passfeder (1) so angepasst ist, dass sie sich entlang einer Richtung der Kraft (F) verschiebt und der Schlitten (2) mit der Spannrolle (4) so angepasst ist, dass er sich nach unten verschiebt.

2. Der Spanner nach Anspruch 1, **dadurch gekennzeichnet, dass** der Winkel zwischen den Arbeitsflächen (10) und (11) der Passfeder (1) zwischen 3 und 20 Grad liegt.

3. Der Spanner nach Anspruch 1, **dadurch gekennzeichnet, dass** die Passfeder (1) an ihrem breiteren Ende mit einem Vorsprung (9) versehen ist, der mit dem Rand der ersten Führungsbahn (3) zusammenwirkt und die Verschiebung der Passfeder einschränkt.

4. Der Spanner nach Anspruch 1, **dadurch gekennzeichnet, dass** die Passfeder (1) ferner an ihrer Seitenfläche mit einer Ratschen-Zahnstange (5) versehen ist, während die erste Führungsbahn (3) mit einer beweglichen Sperrklinke (6) versehen ist, die mit der Ratschen-Zahnstange (5) der Passfeder (1) zusammenwirkt.

## Revendications

1. Un tendeur de brin, de courroie ou de chaîne automatique qui déplace une poulie tendeuse (4) entre une poulie motrice d'entraînement (7, 8) et une poulie alimentée (7, 8), le tendeur comprenant une glissière (2) à laquelle la poulie tendeuse (4) est fixée et qui se déplace le long d'une première voie de guidage (3) adaptée à un boîtier, et un composant par lequel la glissière (2) avec la poulie tendeuse (4) est déplacée, **caractérisé en ce que**
- la glissière (2) présente à sa partie inférieure une deuxième voie de guidage (2a) avec un creux (2b), dont la surface d'appui est inclinée vers une direction du déplacement, - le composant par lequel la glissière (2) avec la poulie tendeuse (4) est déplacée constitue une clé (1) ayant des surfaces de travail supérieure et inférieure inclinées mutuellement (10, 11), où un angle entre les surfaces de travail (10, 11) de la clé (1) est égal à un angle d'inclinaison de la surface d'appui du creux (2b) :
dans lequel
- la clé (1) coopère avec la première voie de guidage (3) et la deuxième voie de guidage (2a) de telle sorte que la surface supérieure (10) de la clé (1) repose sur une surface inférieure de la première voie de guidage (3), tandis que la surface inférieure (11) de la clé (1) touche la surface d'appui du creux (2b) ; et
- sous une force constante (F) exercée sur la clé (1), par exemple par un ressort, la clé (1) est adaptée pour se déplacer selon une direction de la force (F) et la glissière (2) avec la poulie tendeuse (4) est adaptée pour se déplacer vers le bas.

2. Le tendeur selon la revendication 1, **caractérisé en ce que** l'angle entre les surfaces de travail (10) et (11) de la clé (1) est compris entre 3 et 20 degrés.

3. Le tendeur selon la revendication 1, **caractérisé en ce que** la clé (1) est pourvue d'une saillie (9) sur son extrémité la plus large, qui coopère avec le bord de la première voie de guidage (3) et limite le déplacement de la clé.

4. Le tendeur selon la revendication 1, **caractérisé en ce que** la clé (1) est en outre pourvue d'une barre dentée à cliquet (5) sur sa surface latérale, tandis que la première voie de guidage (3) est pourvue d'un cliquet mobile (6) qui coopère avec la barre dentée à cliquet (5) de la clé (1).
